# EUROPÄISCHE PATENTANMELDUNG

(11) **EP 3 263 385 A1**
(43) Veröffentlichungstag der Anmeldung: **03.01.2018**
(21) Anmeldenummer: 17177096.9
(22) Anmeldetag: 21.06.2017
(51) Int. Cl.: B60K 11/08

(54) **MOBILE VERSCHLUSSBAUGRUPPE DER KÜHLERGRILL-HAUPTÖFFNUNG EINES LANDFAHRZEUGS**

(30) Priorität: 01.07.2016 DE 202016103512 U
(71) Anmelder: REHAU AG + Co, 95111 Rehau (DE)
(72) Erfinder: Pennerath, Eddy, 57450 Henriville (FR)

(57) **Zusammenfassung**

Die bewegliche Verschlussbaugruppe (10) der Hauptöffnung (7) des Kühlergrills (2) eines Landfahrzeugs (1), ausgestattet mit einem Schutzgitter (8), besteht aus einer oder zwei Klappen (14) und (15) aus Lamellen (12), die durch ein Gelenkmittel (13) vom Typ eines Scharniers in der Art der Lamellen eines Rollladens gelenkig miteinander verbunden sind.

Sie bewegt sich unter der Wirkung gekoppelter oder gepaarter Motormittel (18) hinter dem Schutzgitter (8) des Kühlergrills (2) entlang von Gleitschienen (16).

Diese Erfindung interessiert Konstrukteure von Landfahrzeugen mit Verbrennungsmotor.

## Beschreibung

Die vorliegende Erfindung betrifft einen beweglichen Kühlergrill-Verschluss eines automobilen Fahrzeugs, der aus mindestens einer Baugruppe einer beweglichen Wand vom Typ einer Klappe besteht, gebildet aus einer Vielzahl von Lamellen, die über Scharniergelenke miteinander verbunden sind.

Bei Landfahrzeugen mit Verbrennungsmotor ermöglicht es die Hauptöffnung des Kühlergrills, den Motorkühler durch einen frischen Luftstrom, der von außen durch den Vorschub des Fahrzeugs auf die Vorderseite des Wärmetauschers des Kühlers aufgeschleudert wird, zu kühlen. Der Wärmetauscher, auf den dieser Luftstrom zuerst trifft, kann derjenige des Kondensators der Klimaanlage des Fahrzeugs sein. Er wird dann gefolgt vom Wärmetauscher des Kühlers. Diese Kühlung ist unter Volllast-Betriebsbedingungen des Motors oder nahezu Volllast notwendig, und auch wenn das Fahrzeug sich im Stillstand befindet oder der Motor sich überhitzt.

Bei Normalbetrieb und hoher Geschwindigkeit ist je nach den Abmessungen des Kühler-Wärmetauschers die Kühlung weit ausreichend und die Gesamtheit der Kühlergrillöffnung ist nicht notwendig.

Unter diesen Bedingungen erweist sich das Vorhandensein dieser Kühlergrillöffnung sogar als nachteilig aufgrund der aerodynamischen Störungen, die sie erzeugt, wodurch sie den Luftwiderstandsbeiwert des Fahrzeugs und folglich auch dessen Leistung sogar deutlich verschlechtert.

Es sind bereits Kühlergrills bekannt, die eine Verschlussvorrichtung aufweisen, gebildet aus horizontalen, schwenkbaren Lamellen, die je nach ihrer Neigung ermöglichen, den im Bereich der Kühlergrill-Hauptöffnung eintretenden Luftstrom zu regeln. Diese Lamellen werden gewöhnlich nur an ihren Enden durch Schwenkachsen gehalten, was ab einer bestimmten Länge und bei hoher Geschwindigkeit eine Verformung der Lamellen durch Biegung unter dem Druck der Luft erzeugt. Dann bilden sie keine vollständige Verschlussvorrichtung mehr, was den Luftwiderstandsbeiwert des Fahrzeugs ungünstig verändert und eine Quelle für Störgeräusche bildet.

Die Erfindung lässt sich als Lösung für das komplexe technische Problem einer Verschlussvorrichtung der Kühlergrill-Hauptöffnung definieren, dem zufolge diese Vorrichtung in der Lage sein muss, dem dynamischen Luftdruck standzuhalten, wenn das automobile Fahrzeug schnell fährt, und dessen Luftwiderstandsbeiwert, der durch die Form seiner Karosserie bestimmt ist, möglichst wenig zu verschlechtern. Darüber hinaus, und häufig insbesondere aus kommerziellen Gründen, muss eine solche Verschlussvorrichtung auch ästhetisch und robust, aber gleichzeitig platzsparend und so leicht wie möglich sein.

Um diese technischen Probleme zu lösen, besteht die erfindungsgemäße Lösung darin, einen beweglichen Verschluss der Kühlergrill-Hauptöffnung in Form einer Verschlussklappe zu verwenden, bestehend aus horizontalen oder vertikalen Lamellen, die durch Scharniere gelenkig miteinander verbunden sind, wobei diese Lamellen vorzugsweise extrudiert und aus Kunststoff sind und in der Art eines Rollladens miteinander verbunden sind. Eine Aufwickelvorrichtung, beispielsweise mit Zahnrädern, ermöglicht es, diese Klappe auf Befehl teilweise oder vollständig, horizontal oder vertikal, im Bereich der Kühlergrill-Hauptöffnung hinter dem Kühlergrill auf- und abzuwickeln.
Diese Aufwickelvorrichtung ermöglicht es beispielsweise, die Klappe abzuwickeln und entlang von Gleitschienen zu verschieben, wenn das automobile Fahrzeug schnell fährt, und sie teilweise oder insgesamt von dieser Öffnung zurückzuziehen, wenn der Motor des automobilen Fahrzeugs die Solltemperatur überschreitet.

Eine Stütze, beispielweise mit einer hinteren Struktur, Stoßdämpfer oder sonstiger, fest verbunden, kann vorteilhafterweise hinter den Lamellen der erfindungsgemäßen Verschlussklappe derart vorgesehen sein, dass sie einen Anschlag für die Rückwärtsbewegung bildet und ihren Widerstand gegen Verformung, die durch den Druck des mit hoher Geschwindigkeit auftreffenden Luftstroms hervorgerufen wird, verstärkt.

Durch Verwendung gewölbter Lamellen ist es ebenfalls möglich, eine gelenkige Verschlussklappe vorzusehen, deren Profil sich für eine bessere ästhetische Wirkung und eine geringere aerodynamische Störung an die Wölbung des Kühlergrills oder des Stoßdämpfers oder jedes anderen Elements, in dessen Bereich sie vorgesehen ist, anpasst.

Sonstige Eigenschaften und Vorteile der Erfindung gehen aus der Lektüre der folgenden detaillierten Beschreibung hervor, einer Beschreibung, die unter Bezugnahme auf die beigefügten Zeichnungen erfolgt. Dabei ist:
- • Figur 1: eine Vorderansicht eines Kühlergrills eines automobilen Fahrzeugs,
- • Figur 2: eine Schnittansicht des Profils eines Kühlergrills, der eine erfindungsgemäße bewegliche Verschlussvorrichtung gemäß einer Ausführungsform mit vertikaler Gleitverschiebung umfasst;
- • Figur 3: eine Detailansicht der beweglichen Verschlussvorrichtung von Figur 2 in zurückgezogener Position;
- • Figur 4: eine Detailansicht der beweglichen Verschlussvorrichtung von Figur 2 in ausgefahrener Position;
- • Figur 5: eine Vorderansicht eines in Phantomdarstellung gezeigten Kühlergrills, der eine erfindungsgemäße bewegliche Verschlussvorrichtung gemäß einer Ausführungsform mit horizontaler Gleitverschiebung umfasst;
- • Figur 6: eine Detailansicht der beweglichen Verschlussvorrichtung von Figur 5 in eingefahrener Position;
- • Figur 7: eine Detailansicht der beweglichen Verschlussvorrichtung von Figur 5 in ausgefahrener Position;
- • Figur 8: eine Vorderansicht eines in Phantomdarstellung gezeigten Kühlergrills, der eine erfindungsgemäße bewegliche Verschlussvorrichtung umfasst, gebildet aus zwei Teilbaugruppen mit horizontaler Gleitverschiebung;
- • Figur 9: eine Detailansicht der beweglichen Verschlussvorrichtung von Figur 8 in eingefahrener Position;
- • Figur 10: eine Detailansicht der beweglichen Verschlussvorrichtung von Figur 8 in ausgefahrener Position; und
- • Figur 11: eine Schnittansicht von oben einer gekrümmten Lamelle der erfindungsgemäßen beweglichen Verschlussvorrichtung, die an jedem Ende ein eingeführtes Ansatzstück umfasst;
- • Figur 12: eine perspektivische Detailansicht, die das Gelenk durch ihr eingeführtes Ansatzstück am Ende der gekrümmten Lamellen von Figur 11 darstellt;
- • Figur 13: eine Profilansicht der Lamellen der erfindungsgemäßen beweglichen Verschlussvorrichtung, die Falze aufweisen; und
- • Figur 14: eine Schnittansicht von oben einer erfindungsgemäßen beweglichen Verschlussvorrichtung in zwei Teilen und mit vertikalen Lamellen.

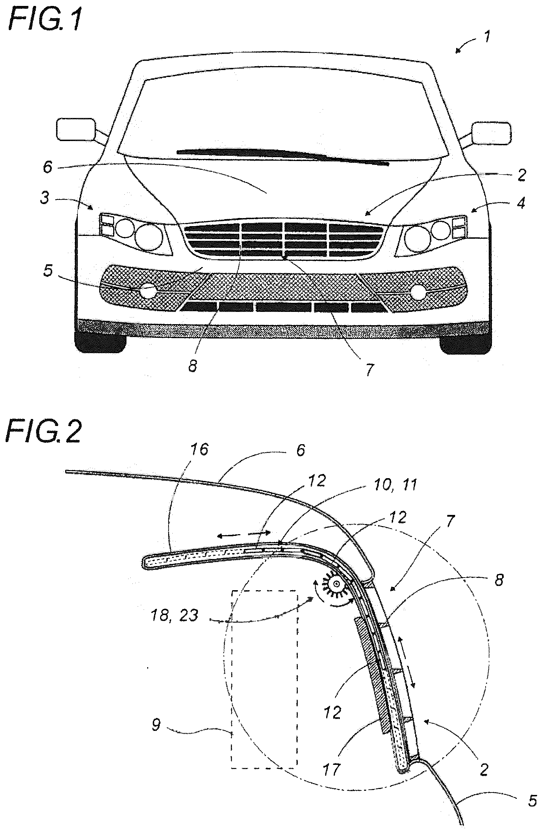

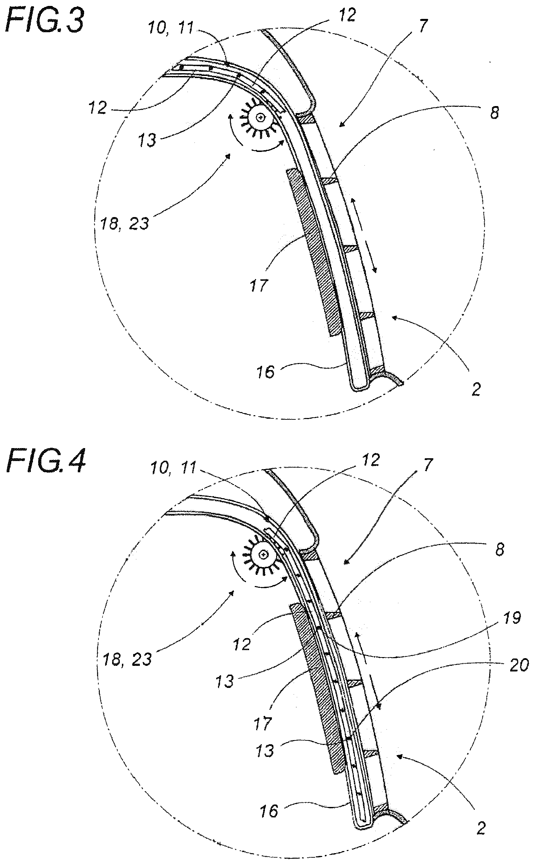

Die erfindungsgemäße bewegliche Verschlussvorrichtung wird nun unter Bezugnahme auf die Figuren 1 bis 14 detailliert beschrieben.

In dieser Beschreibung werden die Begriffe oben und unten, unterer und oberer usw. abhängig von der Ausrichtung definiert, die von der in den verschiedenen Figuren dargestellten beweglichen Verschlussvorrichtung angenommen wird. Es ist offenkundig, dass diese Ausrichtung im Gebrauch nicht zwangsläufig beibehalten wird.

Bei einem Landfahrzeug 1, beispielsweise einem automobilen Fahrzeug, von dem ein Beispiel in Figur 1 dargestellt ist, unterscheidet man einen Kühlergrill 2, der klassischerweise Leucht- und Signalisierungsmittel 3 und 4 umfasst, wie z. B. Scheinwerfer, Blinker und Nebelleuchten, sowie einen Stoßfänger 5. Dieser Kühlergrill 2 stellt im Allgemeinen unter einer Motorhaube 6 eine Hauptöffnung 7 des Kühlergrills 2 dar, versehen mit einem Schutzgitter 8 vor einem vorderen Wärmetauscher 9 eines Kühlers oder eines Kondensators der Klimaanlage.

Die vorliegende Erfindung geht vom allgemeinen Erfindungsgedanken aus, der darin besteht, mindestens eine bewegliche Verschlussbaugruppe 10 vor dem vorderen Wärmetauscher 9 hinter der Hauptöffnung 7 des Kühlergrills 2 vorzusehen. Die bewegliche Verschlussbaugruppe 10 ist vom Typ eines Rollladens 11, im Folgenden als Klappe bezeichnet. Sie ist aus einer Vielzahl von Lamellen 12 gebildet, die durch ein Gelenkmittel 13 vom Typ eines Scharniers gelenkig miteinander verbunden sind, beispielsweise nach Art der Lamellen eines Rollladens oder durch Kontakt einer Lamelle auf oder gegen die andere und am Ende gelenkig miteinander verbunden. Die Lamellen 12 bilden mindestens eine Baugruppe einer beweglichen Wand in vollständiger oder teilweiser Öffnung oder Schließung der Hauptöffnung 7 des Kühlergrills 2.

Die bewegliche Verschlussbaugruppe 10 kann einzig oder aus zwei Verschlussteilbaugruppen 14 und 15 gebildet sein, die sich insbesondere in der Mitte treffen. Sie kann vertikal oder horizontal beweglich sein. Die bewegliche Verschlussbaugruppe 10 des Kühlergrills oder die Verschlussteilbaugruppen 14 und 15 verschieben sich entlang von Gleitschienen 16. Für eine bessere Festigkeit kann eine zweite durchgehende Struktur 17 die Klappe 11 als hintere Anschlagsstütze an ihrer Rückseite stützen. Diese zweite Struktur kann mit dem Gitter 8 des Kühlergrills einstückig ausgebildet sein. Sie dient als hinterer Anschlag für die Lamellen der Klappe(n). Die Klappe oder jede Klappe gleitet zwischen dem Schutzgitter 8 des Kühlergrills 2 und dieser durchgehenden Struktur 17 des hinteren Anschlags.

Es sind gekoppelte oder gepaarte Motormittel 18 vorgesehen, um die Klappe(n) 11 zwischen einer eingefahrenen Ruheposition und einer teilweise oder vollständig ausgefahrenen Arbeitsposition zu verschieben.

Durch die Motormittel 18 werden die Klappe(n) 11 oder 14 und 15 öffnend oder schließend gesteuert durch eine Steuerung, die insbesondere anhand der Geschwindigkeitsdaten des Fahrzeugs und der Temperatur seines Motors erfolgt. So wird diese Verschlussbaugruppe anhand der Sollwerte der Geschwindigkeit des Fahrzeugs und der Temperatur seines Motors in vollständig oder teilweise öffnenden/schließenden Bewegungen gesteuert.

Sicherheitshalber kann ein Mittel zum Rückführen in die eingefahrene Position, beispielsweise durch elastische Rückstellung, vorgesehen werden, um die Klappe(n) 11 bei einem Ausfall der Motormittel 18 in die geöffnete Position zurückzuführen.

Nun werden die oben dargelegten allgemeinen Mittel detaillierter beschrieben.

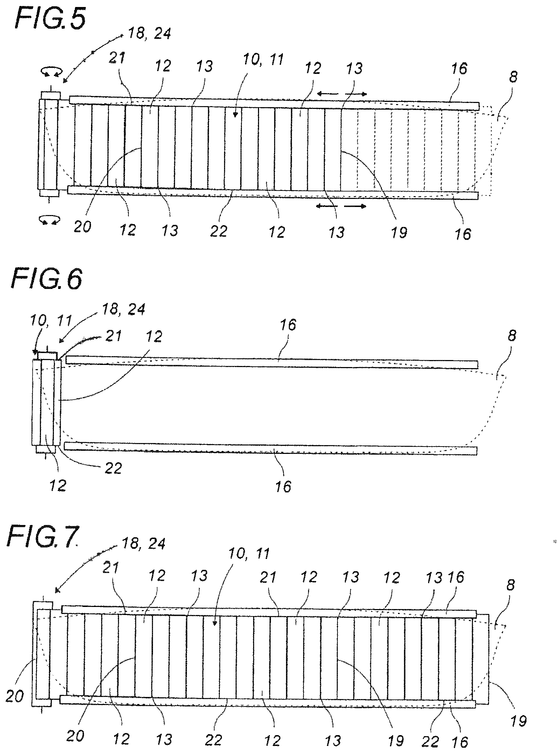

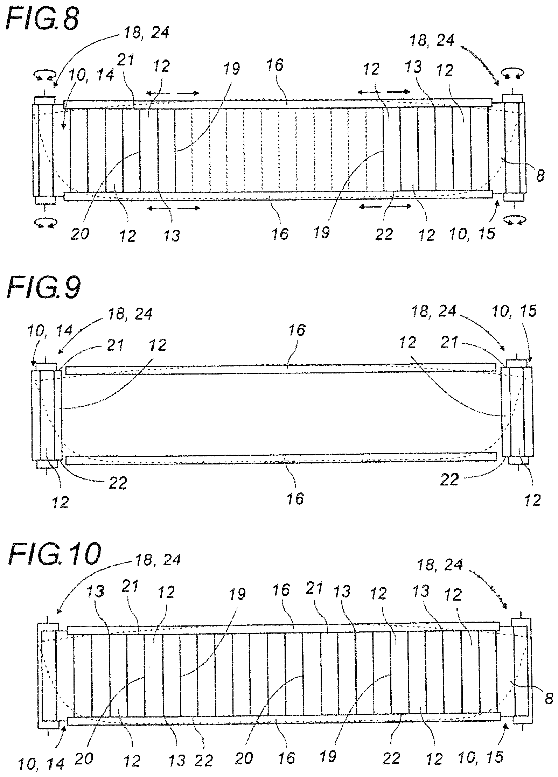

Beispielhaft wird in den Figuren 2 bis 4 eine einzige vertikal bewegliche Verschlussbaugruppe 10 dargestellt, während in den Figuren 5 bis 10 eine horizontal bewegliche Verschlussbaugruppe 10 dargestellt wird, wobei diese in den Figuren 5 bis 7 einzig ist und in den Figuren 8 bis 10 aus zwei Verschlussteilbaugruppen 14 und 15 gebildet ist.

Jede bewegliche Verschlussbaugruppe 10 ist durch eine Nebeneinanderstellung von Lamellen 12 gebildet, die schwenkend gelenkig miteinander verbunden sind, beispielsweise in der Art eines Rollladens oder am Ende der Lamelle, wie nachfolgend zu sehen ist. Die Lamellen 12 sind beispielsweise vom Typ extrudierter Kunststofflamellen, d. h. leicht flexibel. Sie können gebogen, gekrümmt oder gewölbt sein, um die Krümmung des Schutzgitters 8 des Kühlergrills 2 zu beachten.

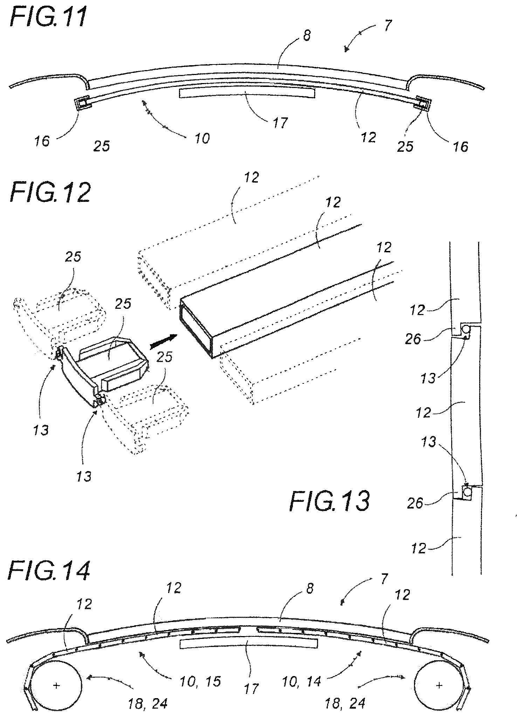

Die Lamellen 12 sind vorzugsweise hohl. Sie können einfach und flach sein, d. h. weder gebogen noch gewölbt, aber auch kurvenförmig wie in den Figuren 11 und 12 dargestellt. Zu bemerken ist, dass Letztere nicht durch Scharniere miteinander verbunden sind, sondern miteinander bzw. gegeneinander in Kontakt und nur an ihren Enden durch eingeführte Ansatzstücke 25 verbunden sind, die als in den Gleitschienen 16 gleitende Führungsschuhe fungieren. Die eingeführten Ansatzstücke 25 sind in die Profile der Lamellen 12 gesteckt und dienen dazu, die Lamellen 12 an ihren Enden gelenkig miteinander zu verbinden. So können sie trotz ihrer Krümmung leicht übereinander schwenken.

Wie in der Figur 13 dargestellt, weisen die Lamellen 12 vorzugsweise Falze 26 auf, die dafür vorgesehen sind, eine Verkeilung und teilweise gegenseitige Verdeckung der Lamellen zu erhalten.

Im Falle, dass die Lamellen 12 der Krümmung des vorderen Teils des Fahrzeugs 1 folgen, seien sie nun horizontal oder vertikal gebogen, können sie sich sehr nah an der Vorderseite befinden, besonders wenn sie vertikal sind (siehe Figur 14), was sich nicht nachteilig auf den Luftwiderstandsbeiwert auswirkt und das Ganze ästhetischer macht. Tatsächlich schwenken die nach dem Stand der Technik bekannten schwenkbaren Lamellen um die eigene Achse zwischen einer Schließposition der Kühlergrillöffnung und einer Offenposition, in der sie horizontal sind. Diese Bewegung benötigt Raum vor allem an der Rückseite der Lamellenebene in dem Fall, dass sich die Schwenkgelenke vorn befinden. In Schließposition bildet sich so ein freier Raum zwischen der Ebene der Lamellen in Schließposition und der Vorderseite des Stoßdämpfers, und es ist nicht möglich, eine zweite durchgehende Struktur 17 hinter den Lamellen in ihrer unmittelbaren Nähe vorzusehen. In diesem freien Raum bildet sich eine Lufttasche, die den Luftwiderstandsbeiwert und das ästhetische Aussehen des Fahrzeugs verschlechtert.

Gemäß einer besonderen Ausführungsform sind die gegenüberliegenden Längskanten 19 und 20 dieser Lamellen 12 komplementär ausgebildet, so dass sie miteinander gegenseitig durchdringende Strukturen bilden, wobei diese passenden Formen zusammengebaut durchgehende Schwenkgelenke 13 vom Typ eines Scharniers bilden können.

Es versteht sich, dass andere Ausführungsformen von Schwenkgelenken vom Typ eines Scharniers möglich sind.

Die Lamellen 12 umfassen einfache oder profilierte seitliche Enden 21 und 22, die geeignet sind, sich durch einfache Verschiebung entlang entsprechender Gleitschienen 16, die über den gesamten Weg dieser Lamellen 12 vorgesehen sind, zu bewegen. Die Enden dieser Lamellen können mit Ansatzstücken versehen sein, die in die seitliche Endöffnung der Lamellen gesteckt sind, um als Gleitschuhe entlang der Gleitschienen zu dienen.

Die Motormittel 18 können von verschiedenen Arten sein. Wie in den Figuren 2 bis 4 dargestellt, können Motormittel 18 mit Zahnrädern 23 vorgesehen werden, die in flexible Stücke in Form von an den Lamellen 12 befestigten oder passend in diesen geformten Zahnstangen in Eingriff kommen, und dies im Bereich jedes der Ränder oder jedes der seitlichen Enden 21 und 22 der Klappe(n) 11.

Im Falle von Motormitteln 18 mit Zahnrädern 23, können einfache Lamellen 12 mit rechteckigem Querschnitt verwendet und eingeführte Endansatzstücke 25 in jedes Ende jeder Lamelle 12 platziert werden. Diese eingeführten Endansatzstücke 25, die in den Gleitschienen 16 gleiten, stellen eine Form dar, die geeignet ist, mit den Zähnen der Motormittel 18 mit Zahnrädern 23 in Eingriff zu kommen.

Die eingeführten Endansatzstücke 25 können integrierte Federblätter umfassen, um nicht zu schwingen.

Die eingeführten Endansatzstücke 25 können auf jeder Seite in die Gleitschienen 16 einsteckbar sein. So sind sie befestigt und gegeneinander gelenkig in einer flexiblen linearen Struktur, die eine gelenkige Schwenkverbindung der Lamellen gewährleistet und sich ununterbrochen in der entsprechenden Gleitschiene 16 bewegt.

Denkbar sind auch Motormittel 18 mit Druckrollen, mit Stößeln, mit Seilzügen, mit Endverbindungen, die mit einer Antriebsscheibe oder einer durch die Lamellen verlaufenden Schleife verbunden sind.

Schließlich können auch Motormittel 18 mit Aufwickler 24 vorgesehen werden, wie in den Figuren 5 bis 10 dargestellt, in denen sich die bewegliche Verschlussbaugruppe 10 um eine Welle oder Achse aufwickelt.

Diese Motormittel 18, die jeweils an den Enden der Lamellen angeordnet sind, sind physisch, elektronisch oder in sonstiger Weise gepaart, so dass sie eine gleichmäßige und ruckfreie Bewegung der beweglichen Verschlussbaugruppe 10 oder der Verschlussteilbaugruppen 14 und 15 ermöglichen.

Eine bestimmte Steuerung dieser Motormittel 18 erfolgt abhängig von der Geschwindigkeit des Fahrzeugs 1 und der Temperatur seines Motors. Positionen der teilweisen Öffnung der beweglichen Verschlussbaugruppe 10 oder der Verschlussteilbaugruppen 14 und 15 sind für mittlere Geschwindigkeiten oder Betriebsbedingungen möglich.

Die Bewegung dieser beweglichen Verschlussbaugruppe 10 oder dieser Verschlussteilbaugruppen 14 und 15 kann bei vertikalen Lamellen horizontal erfolgen oder bei horizontalen Lamellen vertikal erfolgen.

Im Falle horizontaler Lamellen 12 kann die bewegliche Verschlussbaugruppe 10 oberhalb oder unterhalb der Hauptöffnung 7 des Kühlergrills 2 eingefahren werden.

Im Falle vertikaler Lamellen 12 kann die bewegliche Verschlussbaugruppe 10 an der Außenseite in Bezug auf die Hauptöffnung 7 des Kühlergrills 2, beispielsweise innen an den Stoßfängerkreuzen oder zwischen den Nebelleuchten und dem Rand der Hauptöffnung 7 des Kühlergrills 2 eingefahren werden.

Die horizontalen Lamellen können in zwei Gruppen ausgeführt sein, vorzugsweise in zwei Reihen von linken und rechten Teilen mit einer doppelten Gleitschiene 16 in der Mitte und eine an jeder Seite.

Die Gleitschienen 16 können die Form eines L- oder U-Profils aufweisen.

Im Falle eines festen, im mittleren Bereich nicht verschließbaren Schutzgitters 8 kann beispielsweise auf jeder Seite eine Verschlussteilbaugruppe 14, 15 platziert sein, die jeweils kürzer ist als eine vollständige Baugruppe. Der Vorteil dieser Variante besteht darin, im Falle horizontaler Lamellen besser der Krümmung des vorderen Teils des Fahrzeugs 1 zu folgen.

Die Klappen 11, die von den beiden Teilbaugruppen 14 und 15 gebildet werden, treffen sich schließend insbesondere in der Mitte des Schutzgitters 8 des Kühlergrills 2.

Die durchgehende Struktur 17 des hinteren Anschlags sorgt für eine Abstützung der Klappe(n) 11 nach hinten.

Selbstverständlich sind Zwischenversionen möglich, bei denen die Lamellen 12 der 10 beweglichen Verschlussbaugruppe 10 oder dieser Verschlussteilbaugruppen 14 und 15 leicht durchbrochen sind oder verschließbare Öffnungen umfassen.

Selbstverständlich beschränkt sich die Erfindung nicht auf die beschriebenen Ausführungsformen, da der Fachmann verschiedene Änderungen vornehmen und sich andere Varianten ausdenken kann, ohne vom Umfang und Rahmen der Erfindung abzuweichen.

## Patentansprüche

1. Bewegliche Verschlussbaugruppe (10) einer Hauptöffnung (7) eines Kühlergrills (2) eines Landfahrzeugs (1), versehen mit einem Schutzgitter (8), wobei diese bewegliche Verschlussbaugruppe (10) anhand der Geschwindigkeitsdaten des Fahrzeugs (1) und der Temperatur seines Motors öffnend und schließend gesteuert wird, da durch gekennzeichnet, dass:
die bewegliche Verschlussbaugruppe (10) vom Typ eines Rollladens (11) mit seitlichen Enden (21 und 22) ist, gebildet aus einer Vielzahl von Lamellen (12), die durch ein Gelenkmittel (13) beweglich miteinander verbunden sind, und dass
die Lamellen (12) mindestens eine Baugruppe einer beweglichen Wand in vollständiger oder teilweiser Öffnung oder Schließung der Hauptöffnung (7) des Kühlergrills (2) bilden.

2. Bewegliche Verschlussbaugruppe (10) nach Anspruch 1, **dadurch gekennzeichnet, dass** die Lamellen (12) durch ein Gelenkmittel (13) vom Typ eines Scharniers in der Art der Lamellen eines Rollladens beweglich miteinander verbunden sind.

3. Bewegliche Verschlussbaugruppe (10) nach Anspruch 1 oder 2, **dadurch gekennzeichnet, dass** die Lamellen (12) durch ein Gelenkmittel (13) durch Kontakt einer Lamelle auf oder gegen eine andere und am Ende gelenkig miteinander verbunden sind.

4. Bewegliche Verschlussbaugruppe (10) nach einem der vorstehenden Ansprüche, **dadurch gekennzeichnet, dass** sie aus zwei Verschlussteilbaugruppen (14 und 15) vom Typ eines Rollladens (11) besteht, die sich in der Mitte treffen.

5. Bewegliche Verschlussbaugruppe (10) nach einem der vorstehenden Ansprüche, **dadurch gekennzeichnet, dass** sie sich entlang von Gleitschienen (16) bewegt, wobei die Gleitschienen (16) vorzugsweise die Form eines L- oder U-Profils aufweisen.

6. Bewegliche Verschlussbaugruppe (10) nach einem der vorstehenden Ansprüche, **dadurch gekennzeichnet, dass** sie Motormittel (18) umfasst, um die Klappe(n) (11) zwischen einer eingefahrenen Ruheposition und einer teilweise oder vollständig ausgefahrenen Arbeitsposition zu bewegen.

7. Bewegliche Verschlussbaugruppe (10) nach einem der vorstehenden Ansprüche, **dadurch gekennzeichnet, dass** die Lamellen (12) gebogen, gekrümmt oder gewölbt sind, um die Krümmung des Schutzgitters (8) des Kühlergrills (2) zu beachten.

8. Bewegliche Verschlussbaugruppe (10) nach einem der vorstehenden Ansprüche, **dadurch gekennzeichnet, dass** die Lamellen (12) gegenüberliegende Längskanten (19) und (20) aufweisen, die in der Form komplementär ausgebildet sind, so dass sie miteinander gegenseitig durchdringende Strukturen bilden, die zusammengebaut durchgehende Schwenkgelenke (13) vom Typ eines Scharniers bilden.

9. Bewegliche Verschlussbaugruppe (10) nach einem der vorstehenden Ansprüche, **dadurch gekennzeichnet, dass** die Lamellen (12) einfache oder profilierte seitliche Enden (21) und (22) aufweisen, die geeignet sind, sich durch einfache Verschiebung entlang entsprechender Gleitschienen (16), die über den gesamten Weg dieser Lamellen (12) vorgesehen sind, zu bewegen.

10. Bewegliche Verschlussbaugruppe (10) nach einem der vorstehenden Ansprüche, **dadurch gekennzeichnet, dass** die Lamellen (12) jeweils ein eingeführtes Ansatzstück (25) umfassen, das in jedes ihrer Enden gesteckt ist, wobei diese eingeführten Ansatzstücke (25) in den Gleitschienen (16) gleiten und dazu dienen, die Lamellen (12) gelenkig miteinander zu verbinden.

11. Bewegliche Verschlussbaugruppe (10) nach dem vorhergehenden Anspruch, **dadurch gekennzeichnet, dass** die eingeführten Ansatzstücke (25) integrierte Federblätter umfassen.

12. Bewegliche Verschlussbaugruppe (10) nach einem der vorstehenden Ansprüche, **dadurch gekennzeichnet, dass** die Motormittel (18) Motormittel (18) mit Zahnrädern (23) sind, die in flexible Stücke in Form von an den Lamellen (12) befestigten oder passend in diesen geformten Zahnstangen in Eingriff kommen, und dies im Bereich jedes der Ränder oder jedes der seitlichen Enden (21) und (22) der Klappe(n) (11), wobei die Motormittel (18) Motormittel (18) mit Druckrollen, mit Stößeln, mit Seilzügen, mit Endverbindungen, die mit einer Antriebsscheibe oder einer durch die Lamellen verlaufenden Schleife verbunden sind, sind oder wobei die Motormittel (18) Motormittel (18) mit Aufwickler (24) sind.

13. Bewegliche Verschlussbaugruppe (10) nach einem der vorstehenden Ansprüche, **dadurch gekennzeichnet, dass** die Motormittel (18) physisch, elektronisch oder in sonstiger Weise gepaart sind, so dass sie eine gleichmäßige und ruckfreie Bewegung der beweglichen Verschlussbaugruppe (10) ermöglichen.

14. Bewegliche Verschlussbaugruppe (10) nach einem der vorstehenden Ansprüche, **dadurch gekennzeichnet, dass** sie eine durchgehende Struktur (17) eines hinteren Anschlags umfasst, der für eine Abstützung der Klappe(n) (11) nach hinten sorgt.

15. Bewegliche Verschlussbaugruppe (10) nach einem der vorstehenden Ansprüche, **dadurch gekennzeichnet, dass** die Lamellen (12) Falze (26) aufweisen, die dafür vorgesehen sind, eine teilweise gegenseitige Verdeckung der Lamellen zu erhalten.
